# EUROPEAN PATENT SPECIFICATION

(11) **EP 2 877 398 B1**
(45) Date of publication and mention of the grant of the patent: **03.06.2020**
(21) Application number: 13784667.1
(22) Date of filing: 30.04.2013
(51) Int. Cl.: B64D 11/06, B60N 3/00, B60R 11/02, A47B 83/02, B64D 11/00

(54) **TRAY TABLE WITH ELECTRONIC DEVICE SUPPORT**
SERVIERTISCH MIT STÜTZE FÜR EINE ELEKTRONISCHE VORRICHTUNG
TABLETTE AVEC SUPPORT DE DISPOSITIF ÉLECTRONIQUE

(30) Priority: 01.05.2012 US 201261641098 P; 04.10.2012 US 201213644382; 25.02.2013 US 201361768859 P
(43) Date of publication of application: 03.06.2015
(73) Proprietor: Pajic, Nick, Scottsdale, AZ 85260 (US)
(72) Inventor: Pajic, Nick, Scottsdale, AZ 85260 (US)
(74) Representative: Bryers LLP
(86) International application number: PCT/US2013/038941
(87) International publication number: WO 2013/166067

(56) References cited:
- WO-A1-00/02745
- DE-U1- 9 409 709
- FR-A1- 2 941 198
- RU-A- 2009 139 224
- US-A1- 2006 075 934
- US-A1- 2010 205 333
- SmartTray: "Economy class cabin tray tables: X1-e series", , 27 October 2012 (2012-10-27), XP002754766, Retrieved from the Internet: URL:http://www.thesmarttray.com/ProductsGa llary_SmartTrayX1Series.pdf [retrieved on 2016-02-25]

## Description

### BACKGROUND OF THE INVENTION

### 2. Field of the Invention.

The invention relates to inflight entertainment, and in particular to an aircraft tray table with electronic device support.

### 3. Related Art.

Airplane tray tables have been largely unchanged for decades. In general, such tray tables move between a stowed upright position and a service position where a tray table is generally horizontal so that items may be supported by the tray table. In the service position, the tray table may be used to support food, drink, and other items for a passenger. Though positioned directly in reach of a passenger, traditional tray tables are limited to such functionality. Also known are tray tables comprising a planar body for supporting one or more electronic items. Such a tray table is disclosed in document DE 94 09 709 U1, which is considered as being the closest prior art.

From the discussion that follows, it will become apparent that the present invention addresses the deficiencies associated with the prior art while providing numerous additional advantages and benefits not contemplated or possible with prior art constructions.

### SUMMARY OF THE INVENTION

A tray table according to independent claim 1 or 6 having a support for various electronic devices is disclosed herein. As will be detailed herein, the tray table's support allows passengers to easily secure portable or other electronic devices during a flight at ideal viewing or use positions. In this manner, entertainment or other services may be enjoyed while preserving passenger comfort. In addition, the support is highly versatile in that it is configured to accept various electronic devices and even multiple electronic devices at once. In some embodiments, the support may be passenger adjustable to allow passengers of different heights and having different preferences to position portable electronic devices as they desire.

Various configurations for the tray table have been disclosed herein. According to the invention, a tray table for an aircraft passenger seat is disclosed. Such a tray table may comprise a planar body having a top surface for supporting one or more items, and a support formed by an elongated cavity in the planar body for receiving an electronic device. The cavity may comprise a front wall, a back wall, two sidewalls, and a bottom. At least the back wall may be angled toward a back end of the tray table. This allows the support to hold a portable (or other) electronic device at an angle. One or more mounting structures may be at the back end of the tray table to secure the tray table to an aircraft passenger seat.

The front wall may have one or more notches formed therein to accept or otherwise engage a portion of the electronic device to secure the electronic device within the support. The front wall, back wall, or both may protrude inward, such as in a "V" shape, to cause the elongated cavity to have an hourglass shape (in cross-section). In this manner, the electronic device may be supported by the front and/or back walls in a forward or backward tilted orientation as desired by a passenger.

The support may be at the back end of the tray table, and there may be one or more openings in the bottom of the cavity to allow dirt or debris to exit the support. It is contemplated that the cavity may have an "L" shaped cross section to guide dirt and debris to exit at the back end of the tray table.

It is noted that the support may be rotatable within the body of the tray table in one or more embodiments. For example, the cavity may be in a rotatable assembly that allows passengers to position the cavity to a desirable angle, such that their portable electronic device is in a desirable or convenient angle for viewing or use according to their preferences. In such embodiments, the cavity may be rotated between an open and closed position. If not in use, the cavity may be placed in a closed position such as to prevent unwanted dirt or debris from entering the cavity.

A cover may be provided to enclose the cavity to prevent entry of dirt or debris into the cavity. In addition, the tray table may comprise a first and second portion separable along the axis of the support to provide improved access to the cavity for cleaning or maintenance.

In another exemplary embodiment, an aircraft tray table with electronic device support is provided. Such an embodiment may comprise a body having a top surface for supporting one or more items, and a support comprising an elongated cavity in the top surface of the body. The cavity will typically extend laterally across the body and have an opening to receive an electronic device. A cover may be provided to enclose the opening of the cavity, and biasing mechanism may enclose the opening of the cavity by raising the cover to the top surface of the body while allowing the cover to be depressed when the electronic device is received in the cavity. Automatically enclosing the cavity when not in use helps keep the cavity clean. In addition or alternatively, one or more openings may be at a bottom end of the cavity to allow dirt and debris to exit the support. One or more mounts may attach the aircraft tray table to one or more tray table support arms of an aircraft passenger seat.

A notch may be in a wall of the elongated cavity configured to engage a portion of the electronic device to secure the electronic device within the support. In addition, it is noted that the aircraft tray table may comprise a first and second portion separable along the axis of the support to provide improved access to the cavity for cleaning or maintenance. In addition, the support may be rotatable within the body of the aircraft tray table to allow a passenger to select various viewing angles for his or her electronic device.

The aircraft tray table may also comprise an inductive battery charging system configured to wirelessly charge the electronic device. Also, one or more batteries may be secured within a compartment of the aircraft tray table for charging the electronic device. The one or more batteries may be removable from the aircraft tray table.

A method of providing inflight entertainment with an aircraft tray table according to claim 11 is disclosed herein as well. For instance, in one embodiment, such a method may comprise providing a tray table at one or more passenger seats, with the tray table comprising a support comprising an elongated cavity extending laterally across the tray table and the cavity formed in a top surface of the tray table.

The exemplary method also includes receiving an electronic device in the cavity, supporting the electronic device at a non-perpendicular angle relative to the top surface of the tray table, and providing access to inflight entertainment to a passenger via the electronic device. The electronic device may be supported at various non-perpendicular angles selected by the passenger. The cavity may be enclosed with a cover when the electronic device is removed from the cavity. In addition, the electronic device may be inductively charged by the tray table.

A portion of the electronic device may be received in a notch formed in a wall of the elongated cavity to secure the electronic device within the support. A first portion of the tray table may be separated from a second portion of the tray table at the support to clean or maintain an interior portion of the support. Alternatively or in addition, a first portion of the tray table may be folded relative to a second portion of the tray table at the support to clean or maintain an interior portion of the support.

Other systems, methods, features and advantages of the invention will be or will become apparent to one with skill in the art upon examination of the following figures and detailed description. It is intended that all such additional systems, methods, features and advantages be included within this description, be within the scope of the invention, and be protected by the accompanying claims.

### BRIEF DESCRIPTION OF THE DRAWINGS

The components in the figures are not necessarily to scale, emphasis instead being placed upon illustrating the principles of the invention. In the figures, like reference numerals designate corresponding parts throughout the different views.
Figure 1A is a top perspective view of an exemplary tray table with support;
Figure 1B is a cross sectional view of an exemplary tray table with support;
Figure 1C is a cross sectional view of an exemplary tray table with support;
Figure 1D is a cross sectional view of an exemplary tray table with support;
Figure 1E is a bottom view of an exemplary tray table with support;
Figure 1F is a top view of an exemplary tray table with support;
Figure 2 is a perspective view of an exemplary tray table in operation;
Figure 3A is a top perspective view of an exemplary tray table with rotatable support;
Figure 3B is a cross sectional view of an exemplary tray table with rotatable support;
Figure 3C is a cross sectional view of an exemplary tray table with rotatable support;
Figure 4A is a cross sectional view of an exemplary tray table with rotatable support in operation;
Figure 4B is a cross sectional view of an exemplary tray table with rotatable support in operation;
Figure 4C is a cross sectional view of an exemplary tray table with rotatable support in operation;
Figure 4D is a cross sectional view of an exemplary tray table with rotatable support in operation;
Figure 4E is a top view of an exemplary tray table with rotatable support in operation;
Figure 4F is a back perspective view of an exemplary tray table with rotatable support in a closed position;
Figure 4G is a back perspective view of an exemplary tray table with rotatable support in an intermediate position;
Figure 4H is a back perspective view of an exemplary tray table with rotatable support in an open position;
Figure 4I is a front perspective view of an exemplary tray table with rotatable support in an open position;
Figure 4J is a side cross sectional view of an exemplary tray table with rotatable support in operation;
Figure 4K is a side cross sectional view of an exemplary tray table with rotatable support in operation;
Figure 4L is a back cross sectional view of an exemplary tray table with rotatable support in operation;
Figure 5A is a top perspective view of an exemplary tray table with support having separable portions;
Figure 5B is a top perspective view of an exemplary tray table with support having separable portions;
Figure 5C is a top view of an exemplary tray table with support having separable portions in use;
Figure 6A is a perspective view of an exemplary tray table with backward tilted electronic device;
Figure 6B is a cross sectional view of an exemplary tray table with a notched cavity;
Figure 6C is a cross sectional view of an exemplary tray table with a notched cavity;
Figure 6D is a perspective view of an exemplary tray table with forward tilted electronic device;
Figure 6E is a cross sectional view of an exemplary tray table with a notched cavity;
Figure 6F is a cross sectional view of an exemplary tray table with a notched cavity;
Figure 6G is a cross sectional view of an exemplary tray table with a notched cavity and a electronic device configured to engage the notched cavity;
Figure 6H is a cross sectional view of an exemplary tray table with a notched cavity and a electronic device configured to engage the notched cavity;
Figure 6I is a cross sectional view of an exemplary tray table with a notched cavity and a electronic device configured to engage the notched cavity;
Figure 6J is a cross sectional view of an exemplary tray table with a notched cavity and a electronic device configured to engage the notched cavity;
Figure 7A is a cross sectional view of an exemplary tray table with a dual notched cavity and a electronic device configured to engage the dual notched cavity;
Figure 7B is a cross sectional view of an exemplary tray table with a dual notched cavity and an electronic device configured to engage the dual notched cavity;
Figure 8A is a perspective view illustrating an exemplary environment of use for a tray table; and
Figure 8B is a perspective view illustrating an exemplary environment of use for a tray table.

### DETAILED DESCRIPTION OF THE PREFERRED EMBODIMENTS

In the following description, numerous specific details are set forth in order to provide a more thorough description of the present invention. It will be apparent, however, to one skilled in the art, that the present invention may be practiced without these specific details. In other instances, well-known features have not been described in detail so as not to obscure the invention.

In general, the tray table herein provides a versatile support for one or more portable electronic devices. As will be described further below, the tray table may be configured to hold portable electronic devices of various shapes and sizes. This is advantageous in that it allows passengers to enjoy use of their personal electronic devices during a flight. For example, passengers may access and enjoy various media or other inflight entertainment via their electronic devices during a flight. Using the tray table, passengers avoid having to hold, prop up, or otherwise secure their electronic devices in unorthodox ways, such as by leaning the devices against various surfaces at their seats. In addition, the tray table increases passenger comfort by holding portable electronic devices in an ergonomic position. In some embodiments, as will be described further below, the tray table's support may be rotatable or movable to allow adjustments to the position of a portable electronic device. Though described herein with reference to aircraft, it is noted that the tray table herein may be used on trains, busses, limousines, cars, trucks, watercraft or marine vessels, and other forms of transportation.

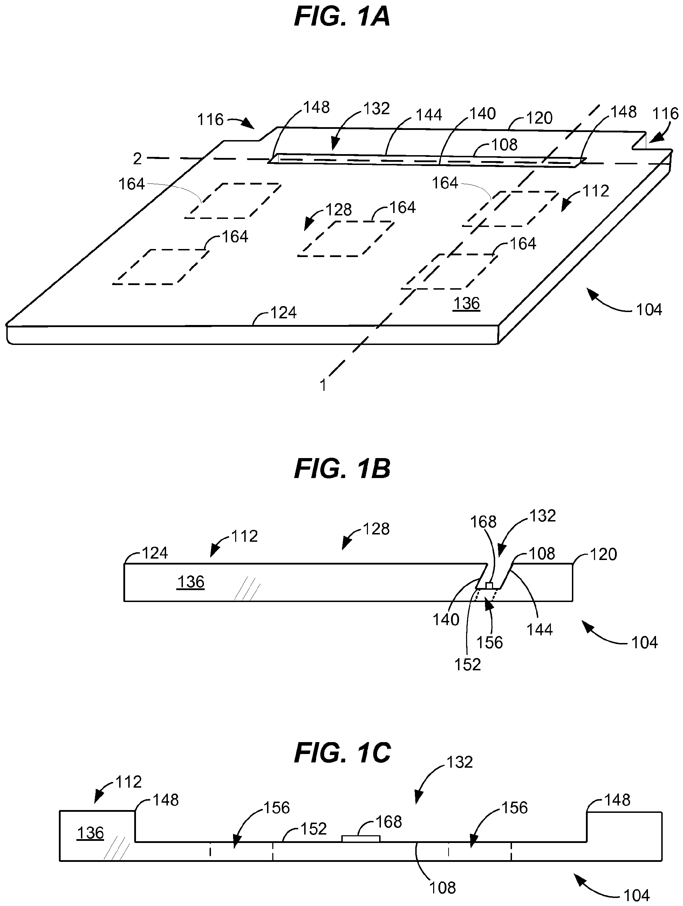

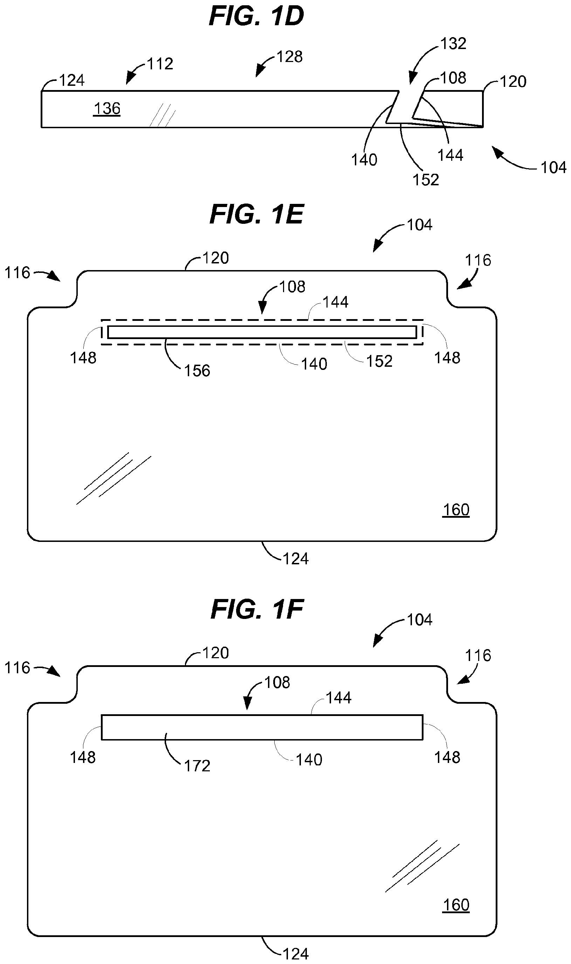

Figure 1A provides a top perspective view of an exemplary tray table 104 having a support 108 for portable electronic devices. As can be seen, the tray table 104 provides a planar top surface 112 that passengers may place their various items on. The tray table 104 may also include one or more mounting points or mounts 116 that allow it to be installed in an aircraft, such as on a back portion an aircraft passenger seat. In typical embodiments, the tray table 104 will mount to the rotatable tray table support arms of aircraft passenger seats. Mounting points may be at or near a back end 120 of the tray table 104. The mounts 116 will typically allow the tray table 104 to rotate or otherwise move so as to allow the tray table to be moved between a stowed position (where it is secured to a seatback) and a service position (where it is substantially horizontal to support items on its top surface).

As can also be seen, the support 108 may be positioned at the back end 120 of the tray table 104. This allows the portion of the top surface 112 in front of the support 108 to be used even when the support 108 is in use. It is contemplated that the support 108 may be located at different locations as well. For instance, the support 108 may be near a front end 124 of the tray table 104, at a central portion 128, or elsewhere. Typically, the support 108 will extend laterally across the tray table 104 parallel to the back edge of the tray table, however it is contemplated that the support 108 may be angled slightly in some embodiments.

In one or more embodiments, the support 108 may be an excavated portion of the tray table 104 configured to accept a portable electronic device. For instance, the support 108 may be a cavity 132 formed in the body 136 of the tray table 104 for instance. The cavity 132 may comprise a front wall 140 and a back wall 144, and one or more sidewalls 148.

It is noted that the tray table 104 may include one or more magnets 164 at or near its top surface 112 to hold a portable electronic device on the top surface. In operation, the magnets 164 would be attracted to a magnetic structure within the portable electronic device, thus holding the portable electronic device. Though shown at particular locations in Figure 1A, it is contemplated that the magnets 164 may be at various locations of the tray table 104. In addition, fewer or additional magnets 164 may be provided in one or more embodiments.

Figures 1B-1C provide cross sectional views of the tray table 104 and support 108. Figure 1B is a cross sectional view across Line 1, while Figure 1C is a cross sectional view across Line 2. As can be seen, the cavity 132 may have a bottom 152 to provide support to a portable electronic device thus preventing the device from sliding out of the support 108 through its bottom. It is noted that the bottom 152 may have one or more openings 156 to allow ventilation and to allow any spilled liquids or other debris to fall out of the support 108. This aids in keeping the support clean.

It is contemplated that the support 108 may be configured to provide connectivity to any device it is holding. For instance, in one embodiment, the support 108 may optionally include an electrical, optical, or other connectors 168 to provide power or data connections to a portable electronic device. If a connector 168 is provided, it is contemplated that one or more magnets may optionally be used to secure a connector 168 to a portable electronic device. In some embodiments, the support 108 may provide wireless connectivity to power or data connections. For example, the support 108 may provide inductive battery charging or a short-range data connection (such as a Bluetooth™ connection) to portable electronic devices. The tray table 104 may contain its own power source, such as one or more batteries, and/or may be connected to an aircraft's power system. The batteries may be rechargeable. In one or more embodiments, the batteries may be held in a compartment within the tray table 104 and be removable therefrom, such as for replacement, recharging, or both.

Figure 1D illustrates a cross sectional view of an additional embodiment of the support 108. As can be seen, the cavity 132 may be "L" shaped thus providing a bottom 152 to support a portable electronic device. The lower portion of the "L" shape terminates at an opening near the back end of the tray table 104. This is advantageous in that it causes any fluids or other dirt/debris to flow toward the back of the tray table. In the event of a spill, such fluids would exit the tray table 104 away from the passenger as much as possible. It is noted that rather than forming the entire cavity 132 into an "L" shape, one or more channels/openings, could form the bottom of the "L" shape and guide dirt and debris toward the back of the tray table.

Referring to Figure 1B, the support 108 may be angled in one or more embodiments. For instance, the support 108 may have a back wall 144 and/or front wall 140 that is at a non-perpendicular angle to the top surface 112 or body 136 of the tray table. As will be described further below, this allows the support 108 to hold a portable electronic device at an angle, which causes the device to face a seated passenger for ideal viewing. In one or more embodiments, the support 108 will be angled rearward towards the back end or edge of the tray table 104 to accomplish this.

It is contemplated that the cavity 132 may have various other cross sectional shapes as well. For example, the front wall 140 and back wall 144 may form a "V" or other shape that tapers from the top surface 112 of the tray table 104. This allows portable electronic devices of various thicknesses to be inserted into and securely held by the cavity 132. Alternatively or in addition, the cavity 132 may have a stepped cross section to produce a set of discrete widths between the front wall 140 and back wall 144. In other words, the front wall 140 and/or back wall 144 may be shaped like steps. This also allows portable electronic devices of various thicknesses to be supported by the cavity 132.

Figure IE is a bottom view of the tray table 104 showing the opening 156 which allows dirt and debris to exit the support 108. As can be seen, the opening 156 extends to the bottom surface 160 of the tray table 104 so that dirt and debris can fall out of the tray table 104. The opening 156 will typically be smaller than the cavity 132 so that an electronic device may be supported therein without falling through the opening. For example, the opening 156 may have a smaller width and/or length than the support 108. Though shown as a single opening 156 in Figure IE, it is contemplated that a plurality of openings may be used.

In addition, an opening 156 may be formed in various shapes and sizes. For example, an opening may have a length of 1-2 inches in some embodiments. This is advantageous in that such opening 156 is large enough to allow dirt and debris to escape while not being so large as to result in a smaller electronic device (such as a phone or other handheld device) to fall through the opening. In one or more embodiments, the bottom 152 of the support 108 may slant towards the opening 156 so as to guide dirt and debris toward the opening.

In one or more embodiments, the body 136 may be constructed to aid in cleaning the tray table 104. For example, the body 136 or portions thereof may be formed from material having anti-microbial or anti-bacterial qualities. In some embodiments, the body 136 or portions thereof may be coated with such materials. It is noted that only portions of the tray table 104, such as the top surface 112 may be formed from or coated with anti-microbial and/or anti-bacterial materials.

It is contemplated that a removable liner may be provided in some embodiments to aid in keeping the support clean. The liner may conform to the cavity 132 and may removed and replaced with a new liner when dirty. Alternatively or in addition, a cover 172, cap or other or covering may be provided to fill the cavity 132 to prevent dirt or debris from entering the support 108. Typically, the cover 172 would have a planar top positioned flush with the top surface 112 of the tray table 104, when inserted into the cavity 132, such as shown in Figure 1F. Figure 1F is a top view of an exemplary tray table 104 having a support 108. It is contemplated that the cover 172 may be affixed to the cavity 132 in some embodiments. For instance, the cover 172 may be a spring loaded or other biased mechanism that may be depressed downward to provide access to the cavity 132, thereby allowing an electronic device 204 to be inserted into the support 108. When not depressed, the biasing mechanism would raise the cover 172 such that it is flush with the top surface 112 of the tray table.

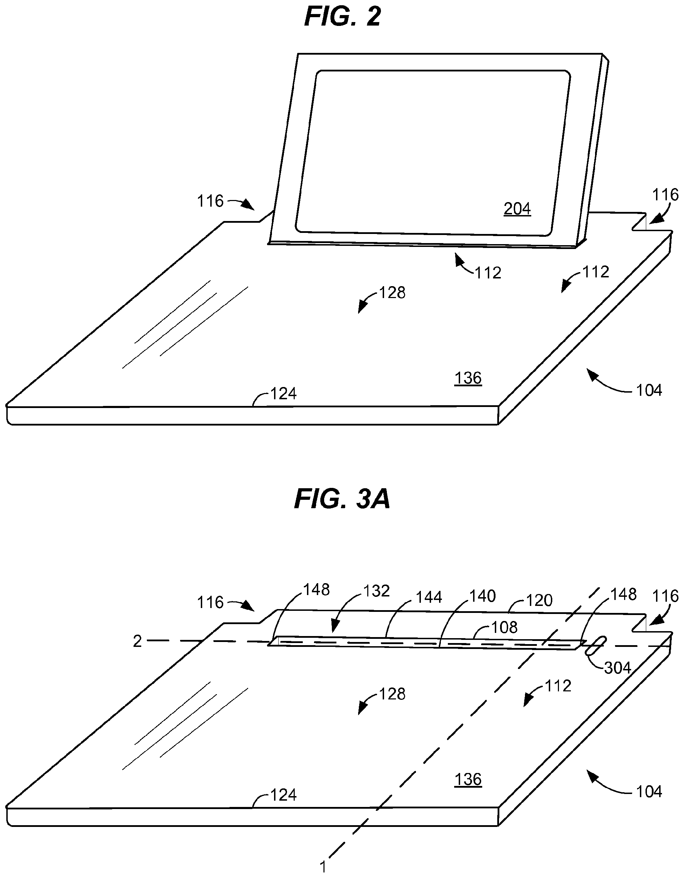

Figure 2 illustrates an exemplary tray table 104 having a portable electronic device 204 installed therein. As can be seen, the portable electronic device 204 may be held by the support 108 at a reclined angle, such as described above. It is contemplated that the support 108 may have a length selected to accommodate a variety of portable electronic devices. For instance, as can be seen from Figure 2, the support 108 may accept a tablet device but also is sized to allow smaller devices, such as portable media players, smart phones, and portable gaming machines, to be held.

As disclosed above, the tray table may provide an adjustable support in some embodiments, such as to permit passengers to position their portable electronic devices at various angles. As will now be described with regard to Figures 3A-3C, the tray table 104 may include a rotatable assembly to allow such positioning.

Figure 3A provides a top perspective view of the tray table 104. As can be seen, the outward appearance of an adjustable embodiment, may be similar to that disclosed above. In one or more embodiments, a control device 304 may be provided to allow the position of the support 108 to be changed. As shown, an adjustment wheel is provided as the control device 304. It is noted that various control devices, such as knobs, levers, sliders, buttons, or the like may be used to move the support 108. In addition, multiple control devices 304 may be provided. For instance an adjustment wheel or other control device 304 could be on both sides of the support 108 in some embodiments.

It is also noted that the support 108 may be biased (such as by one or more springs) in some embodiments. In this manner, the support 108 may be configured to automatically move or rotate to a particular position when a control device 304 is engaged, as will be described further below.

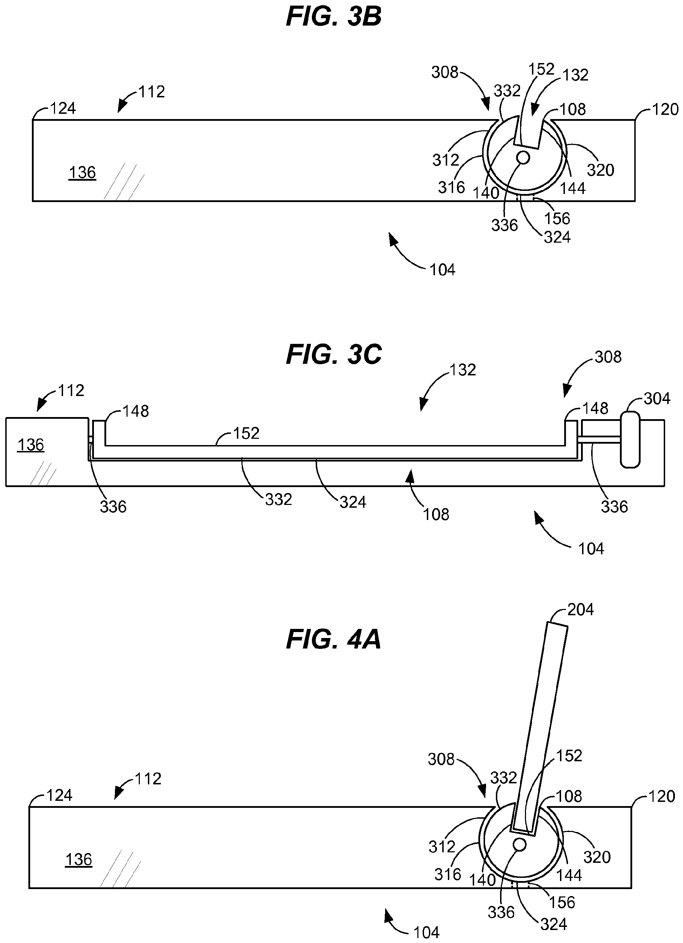

Figure 3B provides a cross sectional view of the tray table across Line 1 of Figure 3A. As can be seen the body 136 of the tray table 104 may be configured to accommodate a rotatable assembly 308. For example, as shown in the embodiment of Figure 3B, a compartment 312 comprising a curved front and back wall 316, 320 configured to accept the rotatable assembly 308 while allowing the rotatable assembly to rotate or move within the compartment is provided. The compartment 312 may include a bottom 324 to enclose the rotatable assembly 308. An optional bottom 324 may be provided in some embodiments. It is noted that without a bottom 328, any dirt or debris that collects in the rotatable assembly 308 can be removed by rotating the assembly such that such debris can fall out of the assembly. Alternatively, and opening 156 may be formed in the bottom 324 of the compartment 312 to allow such dirt and debris to exit the assembly 308.

It is contemplated that the compartment 312 may extend from the top surface to the bottom surface of the tray table's body 136 in some embodiments. In this manner, the compartment 312 would have an opening at its top and bottom. This allows electronic devices to be received in the cavity 132 via the top opening of the compartment 312 while also allowing dirt and debris to exit the assembly via the bottom opening of the compartment. The body 332 of the rotatable assembly 308 may be sized to protrude from both the top and bottom opening of the compartment 312. In this manner, the body 332 itself forms a seal with the compartment 312 thereby preventing dirt and debris from entering the assembly 308.

The rotatable assembly 308 may comprise a body 332 having a cavity 132 therein to accept a portable electronic device. Similar to above, the cavity 132 may comprise a front wall 140, a back wall 144, and one or more sidewalls 148. A bottom 152 may be provided to prevent a portable electronic device from falling out of the cavity 132, such as described above. As can be seen, the cavity 132 may be angled to hold a portable electronic device at an angled position, such as described above. It is contemplated that the cavity 132 may be not be angled (i.e., be perpendicular to the axis of rotation) in some embodiments. With the rotatable assembly 308 for instance, a passenger may choose his or her desired angle by rotating the rotatable assembly. Thus, the cavity 132 itself may but need not be angled in all embodiments.

The body 332 or portion thereof of the rotatable assembly 308 may be rounded or cylindrical in one or more embodiments, such as to allow the rotatable assembly to rotate within the tray table 104. It is contemplated that the body 332 or portion thereof could have other cross sectional shapes. For example, the body 332 may be triangular, a pentagon, hexagon, or other shape. In some embodiments, the shape of the body 332 may be used to help hold the body 332 in position after it has been rotated. For example, the shape of the body may cause it to engage other surfaces of the tray table 104 thus holding the body in position.

One or more holding mechanisms may be used to hold the rotatable assembly 308 in a particular position. For example, a biased braking pad or other surface may press against the rotatable assembly 308 (such as at the body 332) to prevent the rotatable assembly from rotating out of a desired position. Other holding mechanisms, such as removable locking pins, detents, or the like could be used as well. In addition, it is contemplated that the body 332 may closely conform to its compartment 312 to hold itself in position once rotated to a desired position.

Figure 3C illustrates a cross sectional view of the tray table 104 across Line 2 of Figure 3A. As can be seen, the rotatable assembly 308 may comprise one or more axels 336 upon which its rotation may be accomplished. The axels 336 may extend to engage a portion of the rotatable assembly's compartment 312 to support the rotatable assembly 308 therein.

As shown in Figure 3C, an axel 336 may also be mechanically linked to a control device 304 in one or more embodiments. In this manner, the axel 336 and thus the rotatable assembly 308 may be rotated by manipulating a control device 304. For example, in Figure 3C rotating the control device 304 also rotates the rotatable assembly 308. It is noted that one or more biasing devices, such as springs, may engage or be attached to an axel 336 as well. This allows the rotatable assembly 308 to automatically move to a particular position when a biasing device is activated. For example, a biasing device may be configured to rotate the cavity 132 of the rotatable assembly 308 such that it is accessible from the top of the tray table 104. Alternatively, a biasing device could rotate the cavity 132 such that it is inaccessible, thus "closing" the support 108. This may be desirable to prevent unwanted dirt or debris from entering the cavity 132, such as during food service on a flight.

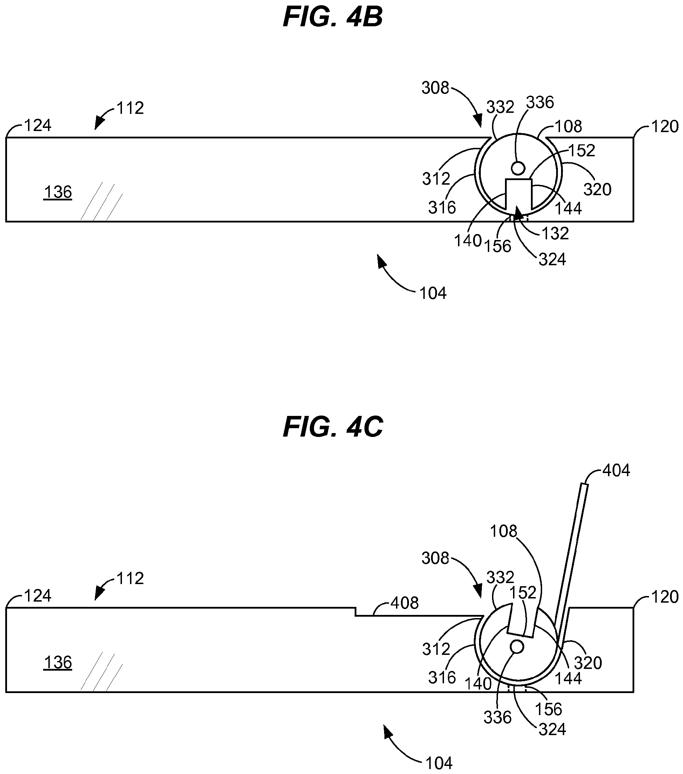

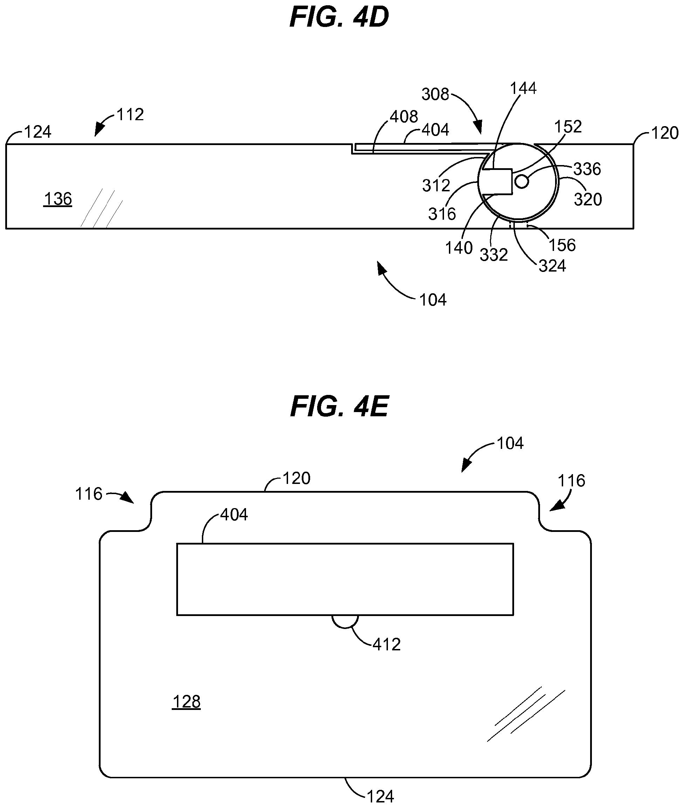

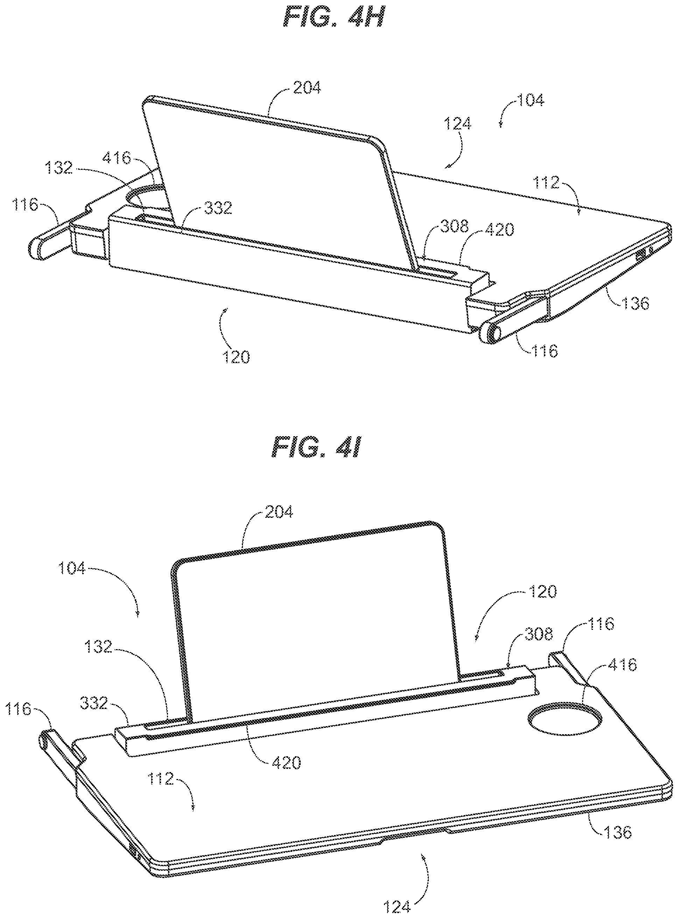

Figures 4A-4B illustrate a rotatable assembly 308 in operation. As can be seen, the rotatable assembly 308 may rotate from the open position shown in Figure 4A to the closed position shown in Figure 4B. In the open position, the cavity 132 of the rotatable assembly 308 is typically accessible, thus allowing one or more portable electronic devices 204 to be supported therein, such as shown in Figure 4A.

When not in use, the rotatable assembly 308 may be rotated to a closed position, such as shown in Figure 4B. As can be seen, the cavity 132 may not be accessible when in the closed position. As stated, this prevents dirt or debris from entering the cavity 132. In embodiments where the tray table's compartment 312 has an opening 156 at its bottom 324, the rotatable assembly 308 may be rotated to empty any dirt or debris that may have collected therein through such opening. For instance, in Figure 4B, it can be seen that any dirt or debris in the cavity 132 may exit through the opening 156 of the compartment 312. It is noted that in alternate embodiments, the compartment 312 may have a removable bottom rather than an opening 156 to allow this cleaning process to occur.

It is noted that the cavity 132 of the tray table 104 may be configured to protect any portable electronic devices it holds. For example, in one or more embodiments, the cavity 132 or portions thereof may be padded or be coated with non-abrasive surfaces to prevent the cavity from scratching or otherwise damaging the enclosure of a portable electronic device.

Figures 4C-4E illustrate another rotatable assembly 308 in operation. As can be seen, an elongated tab 404 extends from the body 332 of the rotatable assembly. The elongated tab 404 may be an elongated member, planer structure, or the like which extends from the body 332. In operation, a bottom portion of an electronic device may be placed in the support 108 while an upper portion is propped up against (i.e., held by) the tab 404. This can be seen from Figure 4C, which illustrates the rotatable assembly 308 in an open position.

Figures 4D-4E illustrate the rotatable assembly 308 in a closed position. In one or more embodiments, the body 136 of the tray table 104 may have a recess 408 formed therein to accept the tab 404. In this manner, when closed, the rotatable assembly's tab 404 is positioned flush with the top surface 112 of the tray table 104. This prevents the rotatable assembly 308 from obstructing use of the tray table and provides a planar surface for placement of one or more items. In addition, as can be seen from Figures 4D-4E, the tab 404 also encloses the compartment 312 preventing dirt and debris from entering. A cutout or recess 412 may be provided to allow the tab 404 to be lifted in some embodiments.

Though shown in a compartment 312 having a bottom 324, it is noted that a bottom need not be provided in all embodiments having a rotatable assembly 308. For instance, as described above, the compartment 312 may have an open bottom to allow dirt and debris to exit the compartment. Alternatively, one or more openings may be formed in the bottom 324, such as described above with regard to Figure 3B, to allow dirt and debris to exit the compartment 312.

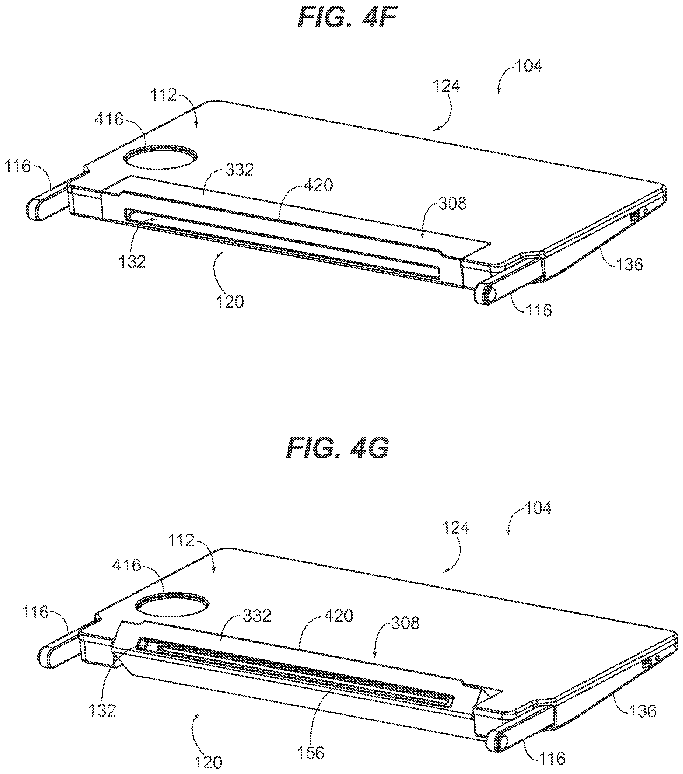

Figures 4F-4I illustrate another exemplary tray table 104 having a rotatable assembly 308. Figures 4F-4G provide a back perspective view of the tray table 104. Figures 4H-4I respectively provide a back and front perspective view of the tray table 104. As can be seen, the rotatable assembly 308 may be formed at the back end 120 of the tray table 104 rather than inset from the back end as described with regard to the above embodiment. The rotatable assembly 308 may comprise a body 332 having a cavity 132 for receiving and securing a portable electronic device 204.

The body 332 may be an elongated structure having flat sides. For instance, as shown in Figures 4F-4I, the body 332 is a rectangular shape extending laterally between a left and right side of the tray table 104 at the back end 120 of the tray table. In one or more embodiments, a lip 420 may extend from a portion of the body 332. As can be seen from Figure 4F, the lip 420 may extend from a top portion of the body 332 so that it forms a barrier to prevent items on placed on the top surface 112 of the tray table 104 from sliding off the back end 120 of the tray table.

The cavity 132 will typically extend along the length of the body 332, such as shown. In one or more embodiments, the cavity 132 may be an elongated opening configured to accept a portion of one or more portable electronic device 204. As shown in Figures 4H-4I for example, the cavity 132 comprises a rectangular opening sized to accept an edge or end of a portable electronic device 204. This secures the portable electronic device 204 within the body 332 and allows a user to use the portable electronic device 204 without having to hold the portable electronic device.

Positioning the body 332 of the rotatable assembly 308 at the back end 120 of the tray table is advantageous in that it allows the cavity 132 to be exposed at the back end of the tray table. When the tray table 104 is in a stowed position, it will typically be in a vertical orientation with the front end 124 of the tray table being above the back end 120 of the tray table. In this manner, any dirt or debris in the cavity 132 would automatically fall out of the cavity keeping the cavity clean and unobstructed. Maintenance or other personnel may then collect such dirt and debris from the floor of the aircraft.

One or more openings 156 may be at the bottom of the cavity 132 in one or more embodiments to also aid in keeping the cavity clean. Typically, an opening 156 will extend from the bottom of the cavity 132 to an external surface of the body 332. This allows any dirt or debris that enters the cavity 132 to fall out of the cavity keeping the cavity clean. Figure 4G illustrates an exemplary opening 156.

Figures 4F-4I also illustrate operation of the tray table 104 as its rotatable assembly 308 rotates from a closed position, as shown in Figure 4F, to an open position as shown in Figures 4H-4I. Figure 4G illustrates the rotatable assembly 308 in an intermediate position as it rotates between an open and closed position.

In the closed position, the body 332 of the rotatable assembly 308 forms a portion of the top surface 112 of the tray table 104. For instance, as shown in Figure 4F, the top portion of the rotatable assembly's body 332 is coplanar with the top surface 112 of the tray table 104. In this manner, the rotatable assembly 308 does not obstruct or hinder use of the tray table 104 when in the closed position. A passenger is therefore free to place items on the top surface 112 of the tray table 104 as desired. For example, the passenger may place food service items such as plates, cups, and utensils on the top surface 112. As shown in Figure 4F, an optional cup holding inset 416 is provided to receive cups or the like. The lip 420 extends upward at the back end 120 of the tray table 104 to prevent items from falling off the back end of the tray table.

When use of a portable electronic device 204 is desired, the rotatable assembly 308 may be rotated to expose a cavity 132. As can be seen, the body 332 of the rotatable assembly 308 may be rotated such that the cavity 132 moves in an arc starting at the back end 120 of the tray table. Figure 4G illustrates the body 332 having been moved from the closed position of Figure 4F. As the rotation of the body 332 continues, the cavity 132 moves upward thereby positioning the cavity to receive a portable electronic device 204, such as shown in Figure 4H-4I. In this open position, the cavity 132 holds the portable electronic device upright for use. Figures 4H-4I respectively provide a back and front perspective view of the tray table 104 with its rotatable assembly 308 in an open position and holding a portable electronic device 204.

In one or more embodiments, the rotatable assembly 308 may be configured such that the opening of the cavity 132 is positioned above the top surface 112 of the tray table 104 when the rotatable assembly is in an open position, such as shown in Figures 4H-4I. This is advantageous in that the higher elevation helps prevent any dirt and debris that may be on the top surface 112 of the tray table 104 from entering the cavity 132.

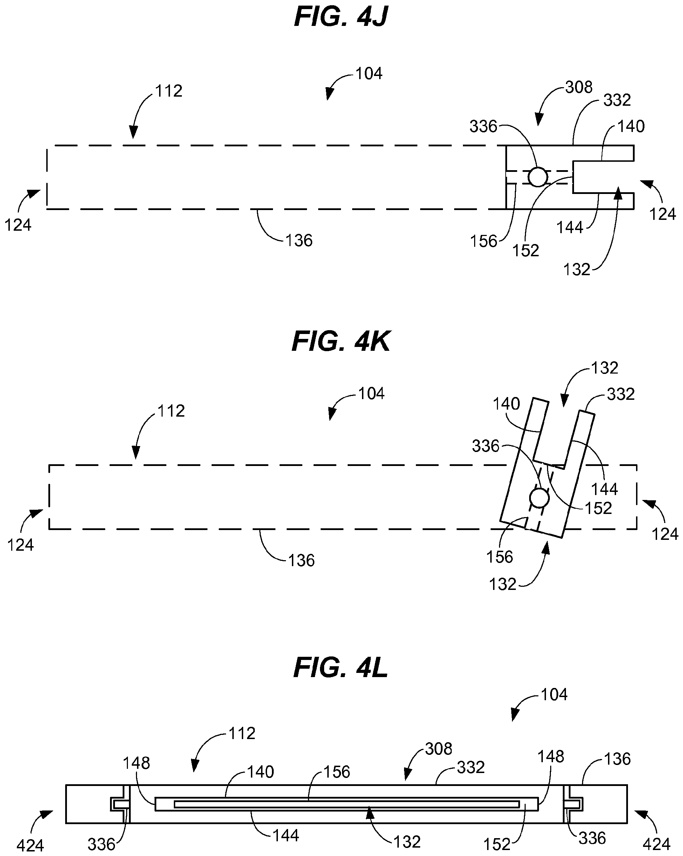

Figures 4J-4K illustrate side cross sectional views of the rotatable assembly 308 of Figures 4F-4I in operation. Figure 4J shows the rotatable assembly 308 in a closed position while Figure 4K shows the rotatable assembly in an open position. As can be seen, the cavity 132 is oriented toward the back end 120 of the tray table 104 in the closed position, while the cavity 132 is oriented upward to receive a portable electronic device 204 in the open position.

As described above, the cavity 132 may comprise a front wall 140, a back wall 144 and one or more sidewalls 148. The bottom 152 of the cavity 132 engages an edge or end of a portable electronic device to support the portable electronic device. An optional opening 156 at the bottom of the cavity 132 allows dirt and debris to exit the cavity, as described above. As can be seen from Figure 4K for example, in the open position, dirt or debris that enters the cavity 132 would fall into the opening 156 and out of the body 332. It is noted that dirt and debris that is too large to fit into the opening 156 would fall out of the cavity 132 when the tray table 104 is put in a stowed position, as described above.

The body 332 of the rotatable assembly 308 may be mounted to the tray table 104 via one or more rotatable mounts. Figure 4L illustrates a back cross sectional view of the rotatable assembly 308 where the body 332 of the rotatable assembly is mounted to the body 136 of the tray table 104 via a pair of axels 336. As can be seen, the axels 336 may extend from the left and right or lateral ends 424 of the body 332 and into a portion of the tray table's body 136 (or vice versa). The body 332 can thus rotate about the axels 336 between the closed and open positions, as shown respectively in Figures 4J-4K.

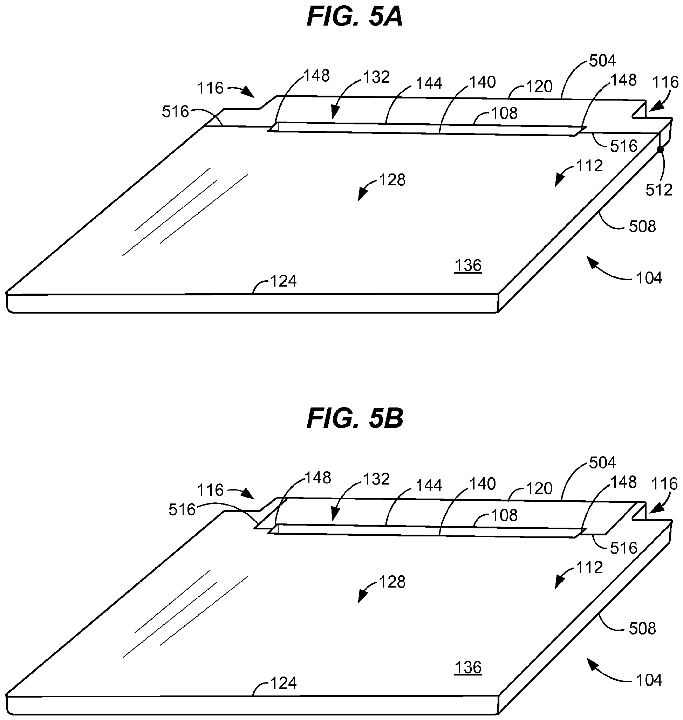

It is contemplated that some embodiments of the tray table 104 may comprise movable or removable portions to allow for cleaning and maintenance. Referring to Figures 5A-5C for example, a first portion 504 of the tray table 104 may be configured to separate from a second portion 508 of the tray table at one or more separations 516. In one or more embodiments, the two portions 504, 508 may meet at or near the support 108. In this manner, the two portions 504, 508 would be separable at or near the support, such as shown. Once separated, access to an interior portion of the support 108 is more easily achieved, such as to clean or maintain the support 108 or any elements associated with the support (such as adjustable elements).

One or more fasteners 512 may be used to allow the first portion 504 and second portion 508 to removably attach to one another. For example, as shown, the tray table 104 may comprise one or more hinges that allow the first and second portions 504, 508 to fold relative to one another, thereby providing access to an interior portion of the support 108. It is contemplated that the hinge may include a biasing mechanism and or locking mechanism to hold the first and second portions 504, 508 in a planar configuration (such as shown in Figure 5A) during use. One or more additional fasteners 512 such as screws, pins, claps, magnets or the like may also or alternatively be used to hold the first and second portions 504, 508 in the planer configuration.

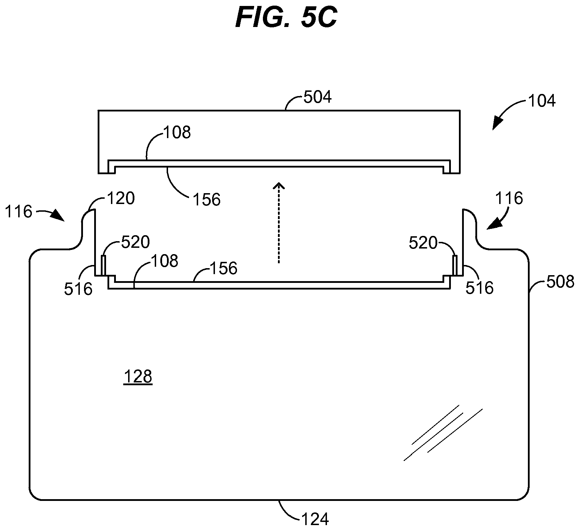

Alternatively, the first and second portions 504, 508 may be completely separable form one another, such as in the embodiments of Figures 5B-5C. For example, the first and second portions 504, 508 may be configured to pull apart when detached from one another. Figure 5C illustrates the tray table 104 having its first and second portions 504, 508 separated from one another.

It is noted that the first and second portions 504, 508 may comprise mating surfaces or structures that secure the first and second portions together when connected. For example, the first and second portions 504, 508 may have grooves, slots, tabs, or the like that correspond to one another. Also, as stated above above, one or more additional fasteners may be used to secure the first and second portions 504, 508 in a planar configuration. As shown in Figure 5C for example, one or more pins 520 may connect and secure the first and second portions 504, 508 together when assembled.

It is contemplated that, when mounted to an aircraft passenger seat, only the first or second portion 504, 508 would be attached to the tray table support arms of the seat. This permits the first and second portions 504, 508 to be removable from one another (such as to clean or maintain the support 108) without removing the tray table 104 from the seat. Alternatively, both the first and second portions 504, 508 may be attached to the tray table support arms, such as to secure the first and second portions together in a planar configuration. In such case, additional fasteners for holding the first and second portions together need not be used.

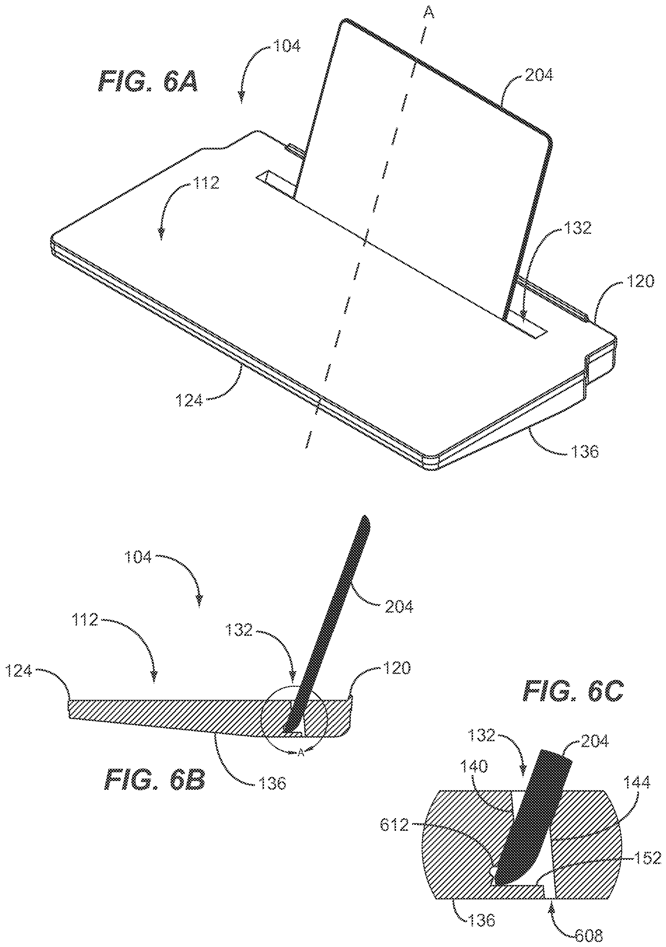

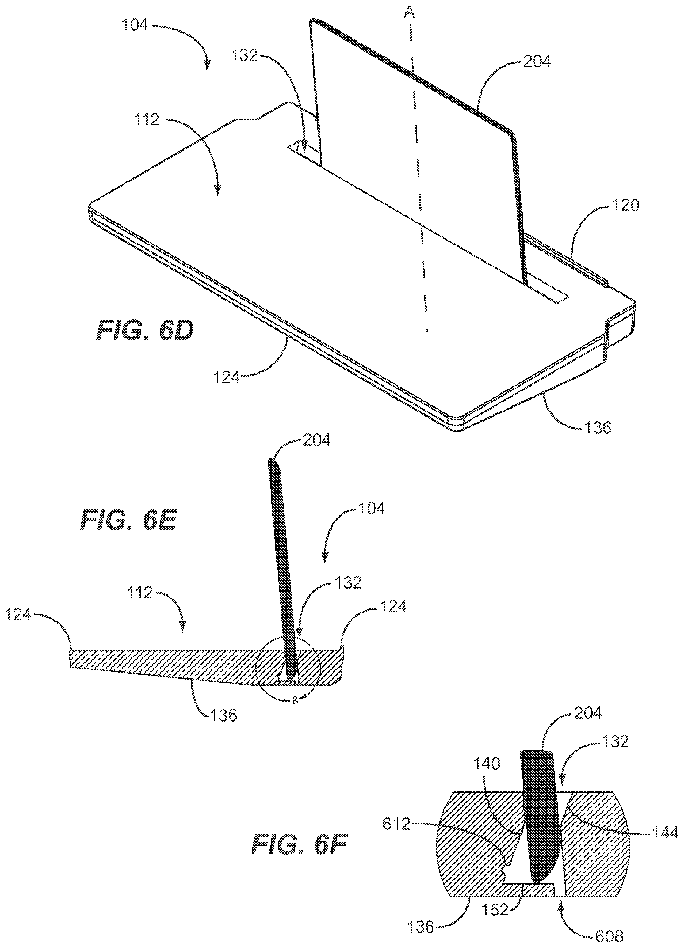

Additional details regarding the tray table 104 will now be described with regard to Figures 6A-6F. Figures 6A-6F provide various views of exemplary tray tables 104 having a cavity 132 configured to allow an electronic device 204 to tilt when held in the cavity. Figures 6A and 6D respectively provide perspective views with the electronic device 204 tilted backward toward a back end 120 of the tray table 104 and tilted forward toward a front end 124 of the tray table. Figures 6B-6C and Figures 6E-6F provide cross sectional views across Line A of Figures 6A and 6B to illustrate the cavity 132 of the tray table 104 in operation.

Referring to Figure 6C, which illustrates a close up view of the cavity 132, it can be seen that the cavity 132 may comprise a back wall 144 and a front wall 140. The back wall 144 and front wall 140 may have various shapes. As shown for example, the back wall 144 and front wall 140 have a "V" shape that causes the cavity 132 to have an hourglass shapes. In one or more embodiments, the cavity 132 may taper inward at its center while flaring outward at the top and bottom surface of the tray table 104, such as shown.

The cavity 132 may comprise a bottom 152 as well, such as to support an electronic device 204. It can be seen from Figure 6C for example, that the bottom 152 holds the electronic device 204 in the cavity 132 preventing the electronic device from falling through the cavity 132. An opening 608 may be in the bottom 132 to allow dirt, debris, liquids, and other unwanted material to exit the cavity 132 to keep the cavity clean.

In the backward tilted position of Figures 6A-6C, it can be seen that a back portion of the electronic device 204 rests on an upper portion of the back wall 144 of the cavity 132, while a front portion of the electronic device engages a lower portion of the front wall 140. The outward flare of the cavity 132 allows the electronic device 204 to tilt while engaged to the cavity 132.

As stated above, Figure 6D provides a perspective view of the tray table 104 having an electronic device 204 in a forward tilted position. As can be seen from Figures 6E-6F, a front portion of the electronic device 204 may rest on an upper portion of the front wall 140 of the cavity 132, while a back portion of the electronic device engages a lower portion of the back wall 144 of the cavity. As can also be seen, the hourglass or outwardly flared shape of the cavity 132 allows the electronic device 204 to move between the forward and backward tilted positions.

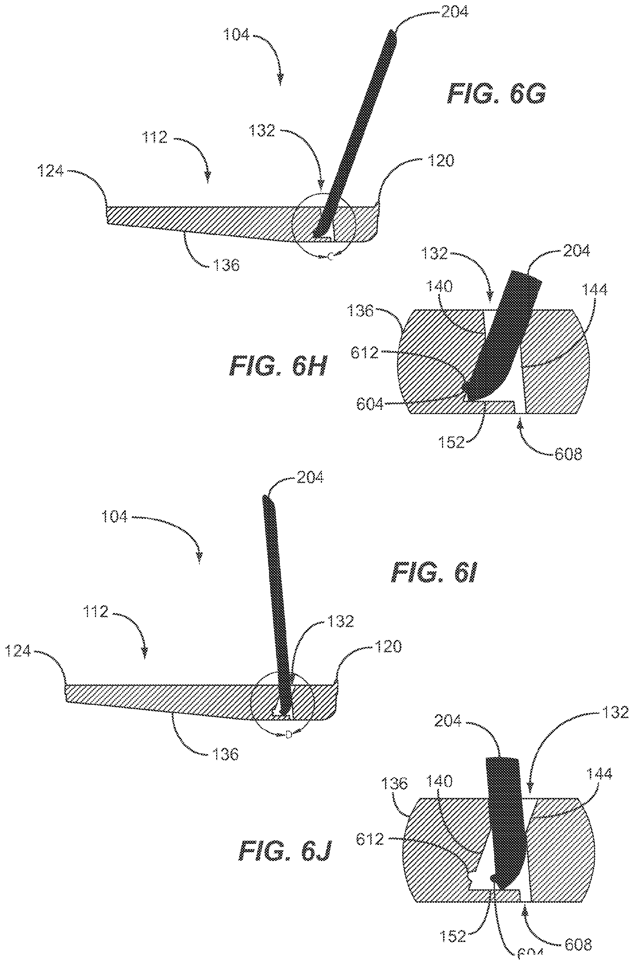

Figures 6G-6J illustrate use of a notch 612 in the cavity 132 configured to engage an electronic device with a tab 604. When engaged or received in a notch 612 of a cavity, the electronic device 204 is further secured. In this manner, it becomes highly unlikely for the electronic device 204 to be accidentally removed. This is advantageous in that it prevents the electronic device 204 from falling out of the cavity 132 due to turbulence or other movement of an aircraft. In addition, if a passenger seat to which the tray table 104 is mounted is moved suddenly, the electronic device 204 is securely held in place. As another example, if a passenger accidentally bumps into the electronic device 204 it will remain secured to the tray table 104. Though shown as a rounded shape, a notch 612 may have a variety of other shapes including angular, square, or other shapes.

In one or more embodiments, a tab 604 may extend outward from a portion of the electronic device 204. The tab 604 is shaped and sized such that it may be received within the notch 612. Once engaged, the tab 604 is not easily removed except by purposeful movement of the electronic device 204 specifically to remove the electronic device. As can be seen, the cavity 132 is sized to allow the electronic device 204 to be tilted such that the tab 604 can be tilted into and out of the notch 612. It is contemplated that the electronic device 204 may have a housing or enclosure having a tab 604 configured to engage the notch 612. Alternatively or in addition, the electronic device may be placed in a sleeve or other covering having a tab 604 to engage the notch 612. In this manner, virtually any electronic device 204 may be secured within the cavity 132 of the tray table 104.

Figures 6G-6J illustrate cross sectional views of various embodiments of a tray table 104 having a notched cavity 132. Referring to Figures 6H and 6J, the cavity 132 may comprise a notch 612 in its front wall 140. The electronic device 204 is likewise configured with a tab 604 that extends outwardly from the front portion of the electronic device 204. In this manner, the tab 604 can engage and extend into the notch 612 when the electronic device 204 is in the cavity 132, such as shown in Figures 6G-6H. The electronic device 204 may be tilted or rotated to a forward tilting position to disengage the tab 604 from the notch 612 thus releasing the electronic device 204 from the tray table 104, such as shown in Figures 6I-6J. The electronic device 204 may be removed once the tab 604 is disengaged from the notch 612.

As can be seen, a lower portion of the back wall 144 may be angled more steeply to allow the electronic device 204 to be tilted within the cavity 132 to engage and disengage its tab 604 to and from the notch 612. It is noted that the lower portion of the back wall 144 may be at various angles.

It is contemplated that a cavity 132 having one or more notches 612 may be in a rotatable assembly 308, such as those described above with regard to Figures 4A-4B. In one or more embodiments, for example, a cavity 132 with one or more notches 612 may be formed in the body 332 of a rotatable assembly, such as to allow further rotation and positioning of an electronic device 204.

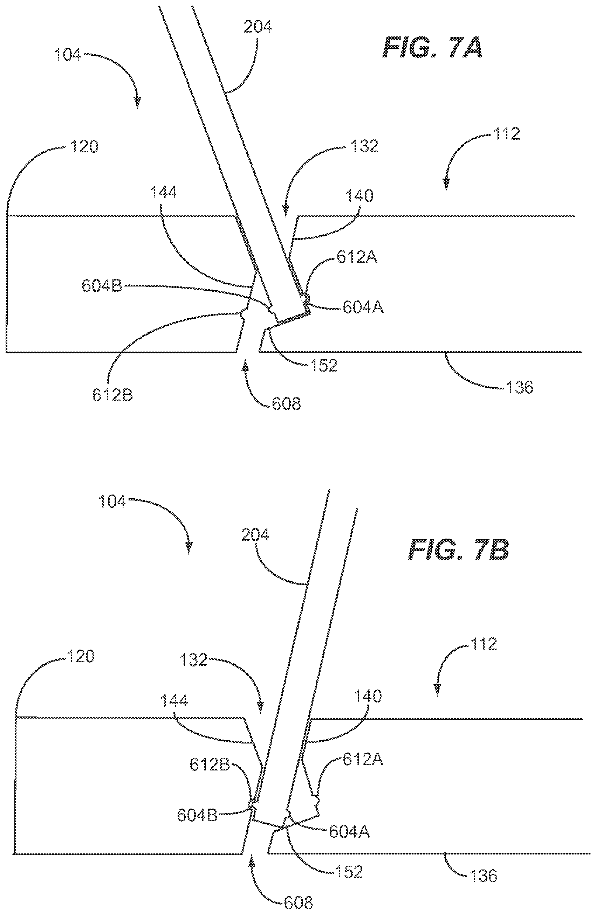

Figures 7A-7B illustrate a tray table 104 having a cavity 132 with dual notches 612A, 612B. As can be seen, a first notch 612A may be in a front wall 140 of the cavity 132 while a second notch 612A is in a back wall 144 of the cavity. The electronic device 204 may have a first tab 604A extending outward from a front side of the electronic device, while a second tab 604B extends outward from the back side of the electronic device. This allows the electronic device 204 to be angled towards the front or back of the tray table 104 as desired and secured in both positions by a corresponding tab and notch, as shown in Figures 7A-7B.

In Figure 7A, the electronic device 204 is angled toward a back end 120 of the tray table 104. In this state, the first tab 604A extends into the first notch 612A at the front wall 140 of the cavity 132. This secures the electronic device 204 in place. As shown in Figure 7B, the electronic device 204 may be tilted such that it is angled toward a front end of the tray table 104 such that the second tab 604B engages the second notch 612B to secure the electronic device 204 in place. The electronic device 204 may be removed by disengaging the first or second tab 604A, 604B from the first or second notch 612A, 612B respectively. In general, rotating or tilting the electronic device 204 such that it is perpendicular or substantially to the tray table 104 causes both tabs 604A, 604B to be disengaged allowing the electronic device to be removed from the cavity 132.

As can be seen, the front wall 140 and back wall 144 of the cavity 132 may be shaped to allow the electronic device 204 to be tilted backward and forward toward the back end 120 and front end 124 of the tray table 104, such as the hourglass shape described above. A bottom 152 supports the electronic device 204 within the cavity 132. An opening 608 in the bottom 152 allows dirt, debris, liquid and other undesired material to exit the cavity 132 to keep the cavity clean.

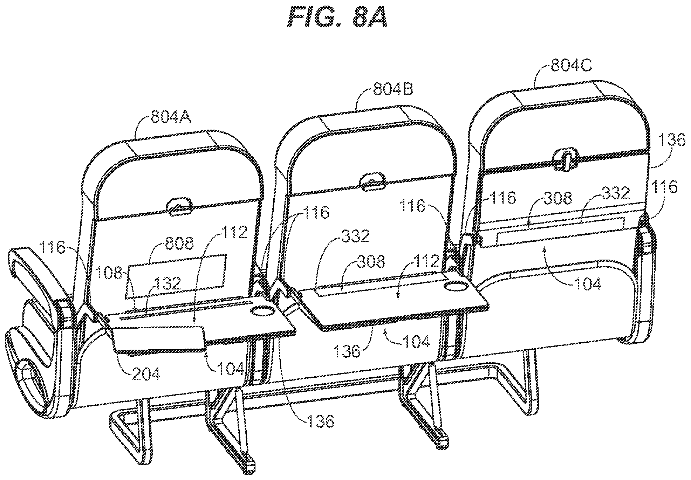

Figures 8A-8B illustrate an exemplary environment of use for the tray tables 104 disclosed herein. As described above, the tray tables 104 may be mounted to passenger seats 804 via one or more mounts 116, such as shown. As can be seen, the mounts 116 may movably attach a tray table 104 to a passenger seat 804 such that the tray table can move between a service position and a stowed position. It is contemplated that the mounts 116 may be elongated arms or members and comprise one or more pivots to allow rotation. In this manner, the mounts 116 movably attach a tray table 104 to a passenger seat 804, while allowing the tray table to move between a service position and a stowed position.

The tray tables 104 of passenger seats 804A, 804B are in a service position, while the tray table of passenger seat 804C is in a stowed position. In one or more embodiments, a tray table 104 will be in an upright orientation when in the stowed position and in a horizontal orientation when in a service position. It is contemplated that an inductive charger 808 may be at back or rear portion of a passenger seat 804A to wirelessly charge a portable electronic device 204. In one or more embodiments, this wireless charging may be activated when the tray table 104 is in a service position. As can be seen, when supported by the cavity 132, a portable electronic device 204 would be adjacent the inductive charger 808 to allow wireless charging.

Figures 8A-8B illustrate various embodiments of the tray table 104 disclosed herein. In Figure 8A, passenger seat 804A has a tray table 104 with a fixed (i.e., non-rotatable) support 108, formed in its body 136, while passenger seats 804B, 804C have a tray table 104 comprising a rotatable assembly 308. As stated above, the tray tables 104 of passenger seats 804A, 804B are in a service position, while the tray table of passenger seat 804C is in a stowed position.

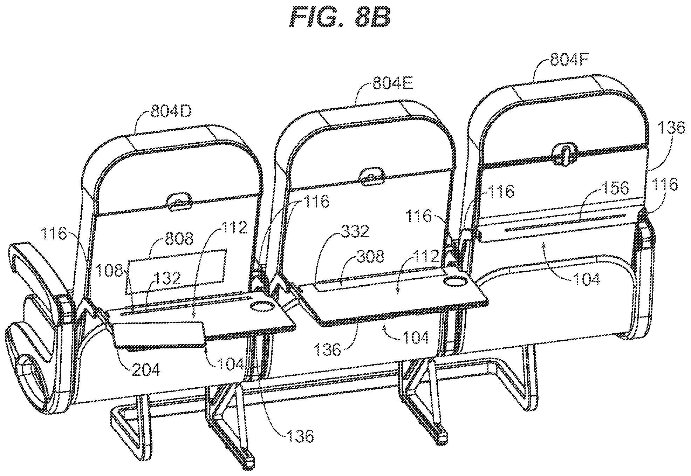

Figure 8B illustrates a similar environment of use as Figure 8A. In Figure 8B, a tray table 104 with a fixed support 108 is shown in a stowed position at passenger seat 804F. An opening 156 for evacuating dirt and debris can be seen at the bottom surface of the tray table 104. As can be seen, when in a service position (such as shown at passenger seat 804D), the opening 156 would allow dirt and debris to fall out of the cavity through the opening.

While various embodiments of the invention have been described, it will be apparent to those of ordinary skill in the art that many more embodiments and implementations are possible that are within the scope of this invention.

## Claims

1. A tray table (104) for an aircraft passenger seat (804), comprising:
a planar body (136) having a top surface (112) for supporting one or more items;
a support (108) formed by an elongated cavity (132) in the planar body (136) for receiving a planar portable electronic device (204), the elongated cavity (132) comprising:
a front wall (140);
a back wall (144);
two side walls (148); and
a bottom (152);
wherein at least the back wall (144) is angled toward a back end (120) of the tray table (104); and
one or more mounting structures (116) configured to secure the tray table (104) to the aircraft passenger seat (804).

2. The tray table (104) of Claim 1, wherein the front wall (140) and the back wall (144) of the elongated cavity (132) are angled inward to give the elongated cavity (132) an hourglass shape.

3. The tray table (104) of Claim 1, wherein the elongated cavity (132) comprises a notch (612) configured to engage a portion of the electronic device (204) to secure the electronic device (204) within the support (108).

4. The tray table (104) of Claim 1, further comprising one or more openings (156) at the bottom (152) of the elongated cavity (132) to allow dirt or debris to exit the elongated cavity (132).

5. The tray table (104) of Claim 1, wherein the tray table (104) comprises a first portion (504) and a second portion (508) separable along the axis of the support (108) to provide improved access to the cavity (132) for cleaning or maintenance.

6. A tray table (104) for an aircraft passenger seat (804) comprising:
a planar body (136) having a top surface (112) for supporting one or more items;
a support (108) comprising an elongated cavity (132) in the top surface (112) of the planar body (136) for receiving a planar portable electronic device (204), the elongated cavity (132) extending laterally across the planar body (136) and comprising a front wall (140) and an angled back wall (144);
one or more mounts (116) configured to attach the aircraft tray table (104) to one or more tray table support arms of an aircraft passenger seat (804).

7. The tray table (104) of Claim 6, wherein the tray table (104) comprises a first portion (504) and a second portion (508) separable along the axis of the support (108) to provide improved access to the elongated cavity (132) for cleaning or maintenance.

8. The tray table (104) of Claim 6, further comprising one or more openings at a bottom (324) of the elongated cavity (132) to allow dirt and debris to exit the elongated cavity (132).

9. The tray table (104) of Claim 6, further comprising an inductive battery charging system (808) configured to wirelessly charge the planar portable electronic device (204).

10. The tray table (104) of Claim 6, further comprising one or more rotatable mounts (336) that rotatably attach the support (108) to the planar body (136).

11. A method of providing inflight entertainment with a tray table (104) for an aircraft passenger seat (804) according to any of the previous claims, comprising:
providing a support (108) at one or more aircraft passenger seats (804), the support (108) comprising an elongated cavity (132) extending laterally across a planar body (136);
receiving a planar portable electronic device (204) in the elongated cavity (132); and
supporting the planar portable electronic device (204) with the elongated cavity (132).

12. The method of Claim 11, further comprising engaging a portion of the edge of the planar portable electronic device (204) with a wall of the elongated cavity (132) to hold the planar portable electronic device (204) at an upright position within the support (108).

13. The method of Claim 11, further comprising separating a first portion (504) of the tray table (104) from a second portion (508) of the tray table (104).

14. The method of Claim 11, further comprising folding a first portion (504) of the tray table (104) relative to a second portion (508) of the tray table (104) at one or more hinges.

15. The method of Claim 11, further comprising inductively charging the planar portable electronic device (204) from the tray table (104).

## Patentansprüche

1. Serviertisch (104) für einen Flugzeugpassagiersitz (804), der aufweist:
einen ebenen Körper (136) mit einer oberen Oberfläche (112) zum Halten eines oder mehrerer Gegenstände;
eine Aufnahme (108), die aus einem länglichen Hohlraum (132) in dem ebenen Körper (136) ausgebildet ist, um eine ebene tragbare elektronische Vorrichtung (204) aufzunehmen, wobei der längliche Hohlraum (132) aufweist:
eine Vorderwand (140);
eine Rückwand (144);
zwei Seitenwände (148); und
eine Unterseite (152);
wobei wenigstens die Rückwand (144) in Richtung eines hinteren Endes (130) des Serviertischs (104) gewinkelt ist; und
eine oder mehrere Montagestrukturen (116), die aufgebaut sind, um den Serviertisch (104) an dem Flugzeugpassagiersitz (804) zu befestigen.

2. Serviertisch (104) nach Anspruch 1, wobei die Vorderwand (140) und die Rückwand (144) des länglichen Hohlraums (132) einwärts gewinkelt sind, um dem länglichen Hohlraum (132) eine Sanduhrform zu verleihen.

3. Serviertisch (104) nach Anspruch 1, wobei der längliche Hohlraum (132) eine Kerbe (612) aufweist, die aufgebaut ist, um mit einem Abschnitt der elektronischen Vorrichtung (204) einzugreifen, um die elektronische Vorrichtung (204) innerhalb der Aufnahme (108) zu befestigen.

4. Serviertisch (104) nach Anspruch 1, der ferner eine oder mehrere Öffnungen (156) an der Unterseite (152) des länglichen Hohlraums (132) aufweist, um zu ermöglichen, dass Schmutz oder Fremdkörper aus dem länglichen Hohlraum (132) austreten.

5. Serviertisch (104) nach Anspruch 1, wobei der Serviertisch (104) einen ersten Abschnitt (504) und einen zweiten Abschnitt (508), der entlang der Achse der Aufnahme (108) trennbar ist, aufweist, um einen verbesserten Zugang zu dem Hohlraum (132) für die Reinigung oder Wartung bereitzustellen.

6. Serviertisch (104) für einen Flugzeugpassagiersitz (804), der aufweist:
einen ebenen Körper (136) mit einer oberen Oberfläche (112) zum Halten eines oder mehrerer Gegenstände;
eine Aufnahme (108), die einen länglichen Hohlraum (132) in der oberen Oberfläche (112) des ebenen Körpers (136) aufweist, um eine ebene tragbare elektronische Vorrichtung (204) aufzunehmen, wobei der längliche Hohlraum (132) sich seitlich quer über den ebenen Körper (136) erstreckt und eine Vorderwand (140) und eine gewinkelte Rückwand (144) aufweist;
eine oder mehrere Halterungen (116), die aufgebaut sind, um den Flugzeugserviertisch (104) an einem oder mehreren Serviertischaufnahmearmen eines Flugzeugpassagiersitzes (804) zu befestigen.

7. Serviertisch (106) nach Anspruch 6, wobei der Serviertisch (104) einen ersten Abschnitt (504) und einen zweiten Abschnitt (508), die entlang der Achse der Aufnahme (108) trennbar sind, aufweist, um einen verbesserten Zugang zu dem länglichen Hohlraum (132) für die Reinigung oder Wartung bereitzustellen.

8. Serviertisch (104) nach Anspruch 6, der ferner eine oder mehrere Öffnungen an einer Unterseite (324) des länglichen Hohlraums (132) aufweist, um zu ermöglichen, dass Schmutz oder Fremdkörper aus dem länglichen Hohlraum (132) austreten.

9. Serviertisch (104) nach Anspruch 6, der ferner ein induktives Batterieladesystem (808) aufweist, das konfiguriert ist, um die ebene tragbare elektronische Vorrichtung (204) drahtlos zu laden.

10. Serviertisch (104) nach Anspruch 6, der ferner eine oder mehrere drehbare Halterungen (336) aufweist, welche die Aufnahme (108) drehbar an dem ebenen Körper (136) befestigen.

11. Verfahren zur Bereitstellung einer Bordunterhaltung mit einem Serviertisch (104) für einen Flugzeugpassagiersitz (804) nach einem der vorhergehenden Ansprüche, das aufweist:
Bereitstellen einer Aufnahme (108) an einem oder mehreren Flugzeugpassagiersitzen (804), wobei die Aufnahme einen länglichen Hohlraum (132) aufweist, der sich seitlich quer über einen ebenen Körper (136) erstreckt;
Aufnehmen einer ebenen tragbaren elektronischen Vorrichtung (204) in dem länglichen Hohlraum (132); und
Halten der tragbaren elektronischen Vorrichtung (204) mit dem länglichen Hohlraum (132).

12. Verfahren nach Anspruch 11, das ferner das Eingreifen an einem Abschnitt des Rands der ebenen tragbaren elektronischen Vorrichtung (204) mit einer Wand des länglichen Hohlraums (132) aufweist, um die ebene tragbare elektronische Vorrichtung (204) in einer aufrechten Position innerhalb der Aufnahme (108) zu halten.

13. Verfahren nach Anspruch 11, das ferner das Trennen eines ersten Abschnitts (504) des Serviertischs (104) von einem zweiten Abschnitt (508) des Serviertischs (104) aufweist.

14. Verfahren nach Anspruch 11, das ferner das Klappen eines ersten Abschnitts (504) des Serviertischs (104) relativ zu einem zweiten Abschnitt (508) des Serviertischs (104) an einem oder mehreren Gelenken aufweist.

15. Verfahren nach Anspruch 11, das ferner das induktive Laden der ebenen tragbaren elektronischen Vorrichtung (204) von dem Serviertisch (104) aufweist.

## Revendications

1. Tablette (104) destinée à un siège de passager d'avion (804), comprenant :
un corps plan (136) présentant une surface supérieure (112) destinée à supporter un ou plusieurs objets ;
un support (108) formé par une cavité allongée (132) dans le corps plan (136) destinée à recevoir un dispositif électronique portable plan (204), la cavité allongée (132) comprenant :
une paroi avant (140) ;
une paroi arrière (144) ;
deux parois latérales (148) ; et
un fond (152) ;
où au moins la paroi arrière (144) est inclinée en direction d'une extrémité arrière (120) de la tablette (104) ; et
une ou plusieurs structures de montage (116) configurées pour fixer la tablette (104) au siège de passager d'avion (804).

2. Tablette (104) selon la revendication 1, dans laquelle la paroi avant (140) et la paroi arrière (144) de la cavité allongée (132) sont inclinées vers l'intérieur pour donner à la cavité allongée (132) une forme de sablier.

3. Tablette (104) selon la revendication 1, dans laquelle la cavité allongée (132) comprend une encoche (612) configurée pour engager une partie du dispositif électronique (204) afin de fixer le dispositif électronique (204) au sein du support (108).

4. Tablette (104) selon la revendication 1, comprenant en outre une ou plusieurs ouvertures (156) au niveau du fond (152) de la cavité allongée (132) afin de permettre aux poussières ou débris de sortir de la cavité allongée (132).

5. Tablette (104) selon la revendication 1, où la tablette (104) comprend une première partie (504) et une seconde partie (508) séparables le long de l'axe du support (108) afin d'offrir un meilleur accès à la cavité (132) pour le nettoyage ou la maintenance.

6. Tablette (104) destinée à un siège de passager d'avion (804), comprenant :
un corps plan (136) présentant une surface supérieure (112) destinée à supporter un ou plusieurs objets ;
un support (108) comprenant une cavité allongée (132) dans la surface supérieure (112) du corps plan (136) destinée à recevoir un dispositif électronique portable plan (204), la cavité allongée (132) s'étendant latéralement en travers du corps plan (136) et comprenant une paroi avant (140) et une paroi arrière inclinée (144) ;
un ou plusieurs dispositifs de montage (116) configurés pour rattacher la tablette d'avion (104) à un ou plusieurs bras de support de tablette d'un siège de passager d'avion (804).

7. Tablette (104) selon la revendication 6, où la tablette (104) comprend une première partie (504) et une seconde partie (508) séparables le long de l'axe du support (108) afin d'offrir un meilleur accès à la cavité allongée (132) pour le nettoyage ou la maintenance.

8. Tablette (104) selon la revendication 6, comprenant en outre une ou plusieurs ouvertures au niveau d'un fond (324) de la cavité allongée (132) afin de permettre aux poussières et débris de sortir de la cavité allongée (132).

9. Tablette (104) selon la revendication 6, comprenant en outre un système de chargement de batterie inductif (808) configuré pour charger de manière sans fil le dispositif électronique portable plan (204).

10. Tablette (104) selon la revendication 6, comprenant en outre un ou plusieurs dispositifs de montage rotatifs (336) qui rattachent avec possibilité de rotation le support (108) au corps plan (136).

11. Procédé de fourniture d'un divertissement à bord au moyen d'une tablette (104) destinée à un siège de passager d'avion (804) selon l'une quelconque des revendications précédentes, comprenant :
le fait de fournir un support (108) au niveau d'un ou de plusieurs sièges de passager d'avion (804), le support (108) comprenant une cavité allongée (132) s'étendant latéralement en travers d'un corps plan (136) ;
le fait de recevoir un dispositif électronique portable plan (204) dans la cavité allongée (132) ; et
le fait de supporter le dispositif électronique portable plan (204) à l'aide de la cavité allongée (132).

12. Procédé selon la revendication 11, comprenant en outre le fait d'engager une partie du bord du dispositif électronique portable plan (204) avec une paroi de la cavité allongée (132) pour maintenir le dispositif électronique portable plan (204) en position verticale au sein du support (108).

13. Procédé selon la revendication 11, comprenant en outre le fait de séparer une première partie (504) de la tablette (104) d'une seconde partie (508) de la tablette (104).

14. Procédé selon la revendication 11, comprenant en outre le fait de plier une première partie (504) de la tablette (104) par rapport à une seconde partie (508) de la tablette (104) au niveau d'une ou de plusieurs articulations.

15. Procédé selon la revendication 11, comprenant en outre le fait de charger par induction le dispositif électronique portable plan (204) à partir de la tablette (104).
